# EUROPÄISCHE PATENTSCHRIFT

(11) **EP 1 081 153 B1**
(45) Veröffentlichungstag und Bekanntmachung des Hinweises auf die Patenterteilung: **14.11.2001**
(21) Anmeldenummer: 00111806.6
(22) Anmeldetag: 06.06.2000
(51) Int. Cl.: C07F 7/16

(54) **Verfahren zur Herstellung von Organochlorsilanen**
Process for the production of organochlorsilanes
Procédé de préparation d'organochlorosilanes

(30) Priorität: 11.08.1999 DE 19937908
(43) Veröffentlichungstag der Anmeldung: 07.03.2001
(73) Patentinhaber: Wacker-Chemie GmbH, 81737 München (DE)
(72) Erfinder: Kalchauer, Wilfried, Dr., 84489 Burghausen (DE); Straussberger, Herbert, 84561 Mehring/ Öd (DE); Streckel, Willibald, 84561 Mehring/ Öd (DE); Gross, Jochen, 84561 Mehring/ Öd (DE)
(74) Vertreter: Fritz, Helmut, Dr.

(56) Entgegenhaltungen:
- DE-C- 19 752 261
- US-A- 4 504 596
- US-A- 5 777 146

## Beschreibung

Die Erfindung betrifft ein kontinuierliches Verfahren zur Direktsynthese von Methylchlorsilanen durch Umsetzung von Chlormethan mit einer Kontaktmasse, welche Silicium und Kupfer-Katalysator enthält.

Bei der Müller-Rochow-Direktsynthese wird Methylchlorid mit Silicium in Gegenwart eines Kupferkatalysators und geeigneten Promotoren zu Methylchlorsilanen umgesetzt, wobei neben einer möglichst hohen Produktivität (Menge an gebildeten Silane pro Zeiteinheit und Reaktionsvolumen) auch eine möglichst hohe Selektivität - bezogen auf das Zielprodukt Dimethyldichlorsilan - gefordert wird. Dimethyldichlorsilan wird beispielsweise für die Herstellung von linearen Polysiloxanen benötigt.

Die Direktsynthese kann diskontinuierlich oder kontinuierlich durchgeführt werden, in der industriellen Produktion wird bevorzugt die kontinuierliche Ausführungsform angewendet. Die kontinuierliche Direktsynthese wird in Wirbelschichtreaktoren durchgeführt, in denen Methylchlorid gleichzeitig als Fluidisierungsmedium und Reaktant eingesetzt wird. Das benötigte Silicium wird zuvor zu einem Pulver der Korngröße höchstens 700 µm vermahlen und mit Kupferkatalysator und Promotoren zur Kontaktmasse vermischt.

Beim kontinuierlichen Betrieb eines Reaktors fallen nach einer weitgehend stabilen Produktionsphase die Produktionsrate bezogen auf Methylchlorsilane und die Selektivität bezogen auf das Zielprodukt Dimethyldichlorsilan ab. Deshalb muß die Produktionskampagne nach einer bestimmten Zeit beendet werden. Eine Produktionskampagne dauert deshalb meist nur einige Tage bis mehrere Wochen.

Der Reaktor wird nach Beendigung einer Produktionskampagne entleert, neu mit Silicium, Kupferkatalysator und Promotoren befüllt und wieder auf Reaktionsbedingungen gebracht. Nach einer gewissen Induktionsphase beginnt die Rohsilanbildung. Darauf folgt die Startphase, d.h. die Reaktion läuft vorerst mit geringer Selektivität und Reaktivität ab. Anschließend erreicht dann der Reaktor wieder die stabile Produktionsphase. Daraus ist ersichtlich, daß durch eine Steigerung der Produktionsrate bei gleichbleibender Selektivität die Wirtschaftlichkeit der Direktsynthese erhöht werden kann.

Die Reaktivität und die Selektivität hängen bei der Direktsynthese sehr stark von den eingesetzten Katalysatoren und Promotoren ab.

In US-Re. 33,452 ist beispielsweise die Direktsynthese mit einer Katalysatorkombination aus den Elementen oder Verbindungen von Kupfer, Zink und Zinn beschrieben. Das Mengenverhältnis der Katalysatoren Kupfer, Zink und Zinn zueinander hat in dem Verfahren einen starken Einfluß auf das Verfahren, insbesondere auf die Produktivität und die Selektivität, während die Form, in der die Katalysatoren in die Kontaktmasse eingebracht werden, beispielsweise als Metall, Legierung oder chemischer Verbindung, von untergeordneter Bedeutung ist.

In "Catalyzed Direkt Reactions of Silicon" Edited by K.M. Lewis and D.G. Rethwisch, Elsevier- 1993, Kapitel 1 "Commercial Production of Silanes by the Direct Synthesis" B.Kanner, K.M. Lewis, Seite 12, werden verschiedene Kupferkatalysatoren beschrieben, die im großtechnisch durchgeführten Prozess zum Einsatz kommen. Beispielsweise wird aufgezeigt, daß Kupfer-I-Chlorid als alleinige Kupferkomponente zum Einsatz kommen kann, aber auch ein Gemisch aus Kupferoxid und Kupfer-I-Chlorid manchmal verwendet wird. Beim Einsatz derartiger Gemische wird die Induktionperiode verkürzt und die Reaktivität erhöht; über den Einfluß dieser Gemische auf die Selektivität werden keine Angaben gemacht.

In "Handbook of Heterogeneous Catalysis" Edited by G. Ertl, H. Knözinger, J. Weitkamp; Volume 4, Wiley-VCH; Kapitel 2 (Inorganic Reactions), 2.5 The Direct Process to Methylchlorosilane (Müller-Rochow Synthesis) von B. Pachaly, Seite 1788 wird dargelegt, daß der Vorteil von Kupferoxid gegenüber CuCl im großtechnischen Verfahren darin zu sehen ist, daß die im Reaktionssystem stattfindende Umwandlung von Kupferoxid in Kupferchlorid langsamer ist, als die Reaktion von CuCl zu Cu₃Si, welches das eigentliche Reaktionszentrum darstellt. Dadurch ist die stationäre Konzentration an CuCl sehr gering, es wird weniger metallisches Kupfer durch die Redoxreaktion von Kupferchlorid mit metallischem Silicium gebildet, und die, durch metallisches Kupfer ausgelösten, unerwünschten Nebenreaktionen, die die Selektivität verringern, treten in verringertem Ausmaß auf. Gleichzeitig wird auf die Möglichkeit hingewiesen, verschiedene Gemische aus unterschiedlichen Kupferkatalysatoren einzusetzen.

In "Chemistry and Technology of Silicones" , W. Noll; Academic Press 1968, Seite 29 wird dargelegt, daß statt metallischem Kupfer auch Kupfer-I-Chlorid eingesetzt werden kann, in diesem Fall aber der Anteil an Methyldichlorsilan ansteigt, d.h. die Selektivität sinkt.

Die chemische Art des eingesetzten Kupfer-Katalysators im Katalysatorsystem hat einen massiven Einfluß auf die Reaktivität und die Selektivität. Kupfer-I-Chlorid liefert eine sehr gute Reaktivität, wobei die Selektivität mit fortschreitender Reaktionszeit stark nachläßt; Kupferoxid zeigt eine lang anhaltende gute Selektivität bei moderater Reaktivität. Wird ein Gemenge aus Kupferoxid und Kupferchlorid als Katalysator eingesetzt, so wird in Abhängigkeit des Mischungsverhältnisses das Reaktionsverhalten durch eine der beiden Einzelkomponenten bestimmt.

Aufgabe der vorliegenden Erfindung war, ein Verfahren zur Direktsynthese von Methylchlorsilanen nach Müller-Rochow bereitzustellen, bei dem unter Beibehaltung der Dimethyldichlorsilan-Selektivität die Produktivität erhöht werden kann.

Gegenstand der Erfindung ist ein kontinuierliches Verfahren zur Direktsynthese von Methylchlorsilanen durch Umsetzung von Chlormethan mit einer Kontaktmasse, welche Silicium, Zinkpromotor und Kupfer-Katalysator enthält, der ausgewählt wird aus
a)Kupferoxid,
b)Gemischen aus mindestens 80 Gew.-% Kupferoxid und Kupfer-I-Chlorid,
c)Kupfer-I-Chlorid und
d)Gemischen aus mindestens 80 Gew.-% Kupfer-I-Chlorid und Kupferoxid, wobei Kupfer-Katalysatoren a), b), c), oder d) derart im Wechsel eingesetzt werden, daß nach Kupfer-Katalysator a) oder b) Kupfer-Katalysator c) oder d) folgt bzw. nach Kupfer-Katalysator c) oder d) Kupfer-Katalysator a) oder b) folgt.

Die vorliegende Erfindung beruht auf der Erkenntnis, daß durch ein phasenweises Wechseln der Kupfer-Katalysatorkomponente von Kupferoxid auf Kupfer-I-Chlorid und umgekehrt die positiven Eigenschaften der einzelnen Kupferkomponenten, nämlich gute Reaktivität von Kupfer-I-Chlorid und lang anhaltende Selektivität von Kupferoxid erhalten bleiben, ohne daß gleichzeitig die negativen Eigenschaften, nämlich moderate Reaktivität von Kupferoxid und Selektivitätsabfall beim Kupfer-I-Chlorid zum Tragen kommen.

Wird beim erfindungsgemäßen Verfahren beispielsweise die Reaktion mit einer Kontaktmasse mit Kupfer-Katalysator a) oder b) gestartet, ändert man, sobald die Reaktion in Bezug auf Reaktivität und Selektivität stabil läuft, den Kupferkatalysator auf c) oder d), worauf die Reaktivität sehr rasch ansteigt, ohne daß vorerst die Selektivität reduziert wird. Diese Katalysatormischung wird so lange beibehalten, bis die Selektivität signifikant zu sinken beginnt. Im Anschluß daran stellt man wieder auf Kupfer-Katalysator a) oder b) um und die Selektivität beginnt unter Beibehaltung der Reaktivität wieder zu steigen. Sobald die Selektivität das gewünschte hohe Niveau erreicht hat und gleichzeitig die Reaktivität wieder zu fallen beginnt, ändert man wieder die Kupferkomponente auf Kupfer-Katalysator c) oder d) . Dieser Vorgang kann beliebig oft während einer Reaktorlaufzeit wiederholt werden.

Die Reaktion kann auch mit einer Kontaktmasse mit Kupfer-Katalysator c) oder d) gestartet werden. In diesem Fall ändert man den Kupferkatalysator auf Kupfer-Katalysator a) oder b) sobald die Selektivität signifikant abfällt. Der weitere Verlauf entspricht sinngemäß der zuvor beschriebenen Vorgehensweise.

Vorzugsweise findet ein Katalysatorwechsel nach 1 bis 1000, insbesondere nach 5 bis 200 Stunden statt.

Vorzugsweise enthalten die Kupfer-Katalysatoren b) mindestens 90 Gew.-% Kupferoxid. Vorzugsweise enthalten die Kupfer-Katalysatoren d) mindestens 90 Gew.-% Kupfer-I-Chlorid.

Das Verfahren wird bevorzugt in einem Wirbelschichtreaktor, vorzugsweise im Temperaturbereich von 250 bis 350°C, insbesondere bei 270 bis 320°C durchgeführt. Weil dies den geringsten Aufwand erfordert, wird das Verfahren meist beim Druck der umgebenden Atmosphäre (also bei etwa 0,lMPa) bis 0,5 MPa durchgeführt, es können aber auch höhere Drücke angewandt werden.

Beim Verfahren können auch weitere Additive, wie sie in der Literatur beschrieben sind, der Kontaktmasse oder dem Gasstrom zugesetzt werden. Vorzugsweise werden keine weiteren Additive zugesetzt.

Die Menge des Gasstromes wird in einer bevorzugten Ausführungsform so gewählt, daß im Reaktor eine Wirbelschicht aus Kontaktmasse und Gas gebildet wird. Die Mischung aus Silicium, Katalysatoren und Promotoren wird als Kontaktmasse bezeichnet. Nicht umgesetztes Chlormethan und die gasförmigen Methylchlorsilane verlassen den Reaktor. Über einen oder mehrere Cyclone kann man, falls erwünscht, die mitgerissenen Partikel von Gasstrom abtrennen, wobei große mitgerissene Partikel aus der Kontaktmasse wieder in den Reaktor zurückgeführt werden.
Das Rohsilan wird anschließend von restlichen Staubanteilen und nicht umgesetzten Chlormethan abgetrennt und einer Destillation zugeführt. Gereinigtes, nicht umgesetztes Chlormethan kann wieder in den Reaktor eingespeist werden.

Die Zubereitung der Kontaktmasse erfolgt durch einfaches Mischen der Einzelkomponenten bei Raumtemperatur. Eine anschließende thermische Behandlung der Kontaktmasse vor dem Einbringen in den Reaktor ist möglich, wird aber in der bevorzugten Ausführungsform nicht durchgeführt.

Das Verfahren wird kontinuierlich durchgeführt. Dies bedeutet, daß die Menge an abreagiertem Silicium und mit dem Reaktionsstaub ausgetragene Katalysatoren und Promotoren laufend nachdosiert werden, vorzugsweise als vorgemischte Kontaktmasse.

Beim erfindungsgemäßen Verfahren wird in einer bevorzugten Ausführungsform Silicium in einer Korngröße von kleiner 700µm, besonders bevorzugt in einer Korngröße von kleiner 500µm und größer 20µm eingesetzt. Das eingesetzte Silicium weist üblicherweise einen Reinheitsgrad von >99% auf.

Beim erfindungsgemäßen Verfahren wird Kupferoxid in Form von Kupfer-II-oxid, in Form von Kupfer-I-oxid, oder als Mischoxide eingesetzt. Im Falle von Mischoxiden der allgemeinen Formel CuOₓ weist x einen Wert von 0,5 bis 1 auf, bevorzugt ist ein Wert von mindestens 0,7. Die beschriebenen Kupferoxide können beispielsweise nach dem in US-A- 5,306,328 beschrieben Verfahren hergestellt werden, wobei der Oxidationsgrad durch die Trocknungstemperatur und die Verweilzeit bei dieser Temperatur gezielt eingestellt werden kann. Die Kupferoxide können auch einen geringen Anteil an metallischem Kupfer enthalten. Vorzugsweise wird die Kupferdosierung so gewählt, daß die Kontaktmasse, unabhängig ob Kupfer-Katalysatoren a), b), c) oder d) eingesetzt werden, 0,3 bis 10 Gew.-%, insbesondere 0,5 bis 7 Gew.-% berechnet als metallisches Kupfer und bezogen auf das eingesetzte Silicium enthält, besonders bevorzugt sind 0,8 bis 5 Gew.-%.

Beim erfindungsgemäßen Verfahren wird Zink vorzugsweise in Form von metallischem Zink, auch als Legierung mit weiteren Promotoren, Zinkoxid, oder -chlorid eingesetzt. Die Menge an eingesetztem Zink wird so gewählt, daß in der Kontaktmasse vorzugsweise 0,005 bis 1,0 Gew.%, insbesondere 0,010 bis 0,50 Gew.% Zn, berechnet als metallisches Zink und bezogen auf Silicium enthalten sind, besonders bevorzugt sind 0,015 bis 0,35 Gew.% Zn.

Als weitere Promotoren können bevorzugt Phosphor, Cäsium, Barium, Eisen, insbesondere Zinn oder Antimon oder Kombinationen davon eingesetzt werden.

Beim erfindungsgemäßen Verfahren werden die Promotoren vorzugsweise als Metalle oder Legierungen eingesetzt. Die Menge an eingesetzten Promotoren wird so gewählt, daß in der Kontaktmasse bevorzugt 5 bis 100 ppm, insbesondere 10 bis 80 ppm, berechnet als metallische Promotoren und bezogen auf Silicium vorkommen, besonders bevorzugt werden 15 bis 60 ppm Promotoren eingesetzt.

In den nachfolgenden Beispielen sind, falls jeweils nicht anders angegeben,
a) alle Mengen auf die Masse bezogen;
b) alle Drücke 0,10 MPa (abs.);
c) alle Temperaturen 20°C;

### Beispiele:

In einem großtechnischen Wirbelschichtreaktor (ca. 30 Tonnen Kontaktmasse) mit kontinuierlicher Kontaktmassenbeschickung, Hauptzyklon mit Staubrückführung und Nachzyklon mit Staubausschleusung werden unter vergleichbaren Bedingungen (Temperatur, Druck, Gasgeschwindigkeit, Silicium-Qualität, Promotoren: Sn und ZnCl₂, u.s.w. ) die nachstehenden Kupferkatalysatoren eingesetzt. Die angegebenen Daten beziehen sich auf die stabile Produktionsphase.

### Beispiel 1 (nicht erfindungsgemäß):

Nachweis, daß CuO eine lang anhaltende gute Selektivität bei moderater Reaktivität bewirkt. CuO wurde nach dem in US 5,306,328 beschriebenen Verfahren hergestellt.

Über einen Zeitraum von 7 Tagen blieben Selektivität und Reaktivität innerhalb einer gewissen Schwankungsbreite im gleitenden 8 Stunden-Mittelwert konstant bei:
3,2 Tonnen Rohsilan je Stunde (+/- 0,3)
85,2 Gew.% (+/- 1,7%) Dimethyldichlorsilan im Rohsilan.

### Beispiel 2:

Nachweis, daß CuCl eine sehr gute Reaktivität bei einer fallenden moderaten Selektivität bewirkt, und daß durch einen laufenden Katalysatorwechsel von CuO auf CuCl und zurück eine hohe Reaktivität bei guter Selektivität erreicht werden kann. CuCl ist käuflich erhältlich bei der Firma Faravelli Chemiehandelsges. mbH, Deutschland. In den laufenden Reaktor, der mit CuO gestartet wurde (Reaktivität und Selektivität wie in Beispiel 1 angegeben), wurde in der stabilen Produktionsphase der Kupferkatalysator von CuO auf CuCl gewechselt.

15 Stunden nach der Katalysatorumstellung wurden im 8 Stunden-Mittelwert folgende Daten ermittelt:
3,9 Tonnen Rohsilan je Stunden
86,9 Gew.% Dimethyldichlorsilan im Rohsilan;
72 Stunden nach der Katalysatorumstellung wurden im 8 Stunden-Mittelwert folgende Daten ermittelt:
   4,5 Tonnen Rohsilan je Stunde
   81,0 Gew.% Dimethyldichlorsilan im Rohsilan;
(Nachweis, daß beim längeren Einsatz von CuCl die Selektivität nach einer gewissen Zeit massiv abfällt);

Anschließend wurde der Katalysator wieder von CuCl auf CuO gewechselt.
12 Stunden nach dem Wechsel wurden folgende Daten ermittelt:
4,5 Tonnen Rohsilan je Stunde
83,8 Gew.% Dimethyldichlorsilan im Rohsilan;

36 Stunden nach dem Katalysatorwechsel wurden im 8 Stunden-Mittelwert folgende Daten ermittelt:
4,0 Tonnen Rohsilan je Stunden
85,4 Gew.% Dimethyldichlorsilan im Rohsilan.

96 Stunden nach dem Katalysatorwechsel wurden die im Beispiel 1 dargestellten 8 Stunden Mittelwerte ermittelt.

### Beispiel 3:

### Vorgehensweise analog Beispiel 2

In der konstanten Produktionsphase einer CuO-Kontaktmasse betrug die Selektivität im 8 Stunden Mittelwert unmittelbar vor dem Katalysatorwechsel auf CuCl:
86,9 Gew.% Dimethydichlorsilan;
96 Stunden nach dem Katalysatorwechsel und unmittelbar vor dem neuerlichen Wechsel auf CuO betrug die Selektivität im 8 Stunden Mittelwert :
   83,4 Gew.% Dimethydichlorsilan;
16 Stunden nach dem letzten Katalysatorwechsel und unmittelbar vor dem neuerlichen Wechsel auf CuCl betrug die Selektivität im 8 Stunden Mittelwert :
86,5 Gew.% Dimethydichlorsilan;
37 Stunden nach dem letzten Katalysatorwechsel und unmittelbar vor dem neuerlichen Wechsel auf CuO betrug die Selektivität im 8 Stunden Mittelwert :
84,9 Gew.% Dimethydichlorsilan;
17 Stunden nach dem letzten Katalysatorwechsel und unmittelbar vor dem neuerlichen Katalysatorwechsel betrug die Selektivität im 8 Stunden Mittelwert :
86,8 Gew.% Dimethydichlorsilan;

### Beispiel 4 (nicht erfindungsgemäß):

Im Anschluß an Beispiel 3 wurde beim nächsten Katalysatorwechsel ein Gemenge aus CuO und CuCl im Gewichtsverhältnis von 3:1 eingesetzt; 12 Stunden nach dem Wechsel fiel die Selektivität wieder auf 83,9 Gew.% Dimethyldichlorsilan (Nachweis, daß ein nicht erfindungsgemäßes Gemenge aus CuCl und CuO den positiven Effekt nur in abgeschwächter Form liefert).

## Patentansprüche

1. Kontinuierliches Verfahren zur Direktsynthese von Methylchlorsilanen durch Umsetzung von Chlormethan mit einer Kontaktmasse, welche Silicium, Zinkpromotor und Kupfer-Katalysator enthält, der ausgewählt wird aus
a)Kupferoxid,
b)Gemischen aus mindestens 80 Gew.-% Kupferoxid und Kupfer-I-Chlorid,
c)Kupfer-I-Chlorid und
d)Gemischen aus mindestens 80 Gew.-% Kupfer-I-Chlorid und Kupferoxid, wobei Kupfer-Katalysatoren a), b), c), oder d) derart im Wechsel eingesetzt werden, daß nach Kupfer-Katalysator a) oder b) Kupfer-Katalysator c) oder d) folgt bzw. nach Kupfer-Katalysator c) oder d) Kupfer-Katalysator a) oder b) folgt.

2. Verfahren nach Anspruch 1, wobei ein Katalysatorwechsel nach 1 bis 1000 Stunden stattfindet.

3. Verfahren nach Anspruch 1 oder 2, bei dem als weitere Promotoren Phosphor, Cäsium, Barium, Eisen, Zinn, oder Antimon oder Kombinationen davon eingesetzt werden.

## Claims

1. Continuous process for the direct synthesis of methylchlorosilanes by reacting chloromethane with a catalyst composition comprising silicon, zinc promoter and copper catalyst which is selected from
a) copper oxide,
b) mixtures of at least 80% by weight of copper oxide and copper(I) chloride,
c) copper(I) chloride and
d) mixtures of at least 80% by weight of copper(I) chloride and copper oxide,
where copper catalysts a), b), c) or d) are employed alternately in such a way that copper catalyst a) or b) is followed by c) or d), or copper catalyst c) or d) is followed by copper catalyst a) or b).

2. Process according to Claim 1, where a catalyst change takes place after from 1 to 1000 hours.

3. Process according to Claim 1 or 2, in which the further promoters employed are phosphorus, caesium, barium, iron, tin or antimony, or combinations thereof.

## Revendications

1. Procédé continu pour la synthèse directe de méthylchlorosilanes par la réaction du chlorométhane avec une masse catalytique qui contient du silicium, un activateur à base de zinc et un catalyseur à base de cuivre qui est choisi parmi
a) l'oxyde cuivre,
b) des mélanges d'au moins 80 % en poids d'oxyde de cuivre et de chlorure cuivreux,
c) le chlorure cuivreux et
d) des mélanges d'au moins 80 % en poids de chlorure cuivreux et d'oxyde de cuivre,
les catalyseurs à base de cuivre a), b), c) ou d) étant utilisés en alternance, de sorte qu'au catalyseur à base de cuivre a) ou b) fait suite le catalyseur à base de cuivre c) ou d) , ou, au catalyseur à base de cuivre c) ou d) fait suite le catalyseur à base de cuivre a) ou b).

2. Procédé selon la revendication 1, dans lequel un changement de catalyseur a lieu au bout de 1 à 1 000 heures.

3. Procédé selon la revendication 1 ou 2, dans lequel on utilise comme autres activateurs le phosphore, le césium, le baryum, le fer, l'étain ou l'antimoine, ou des associations de ceux-ci.
